# EUROPEAN PATENT SPECIFICATION

(11) **EP 2 010 094 B1**
(45) Date of publication and mention of the grant of the patent: **22.07.2015**
(21) Application number: 07732310.3
(22) Date of filing: 05.04.2007
(51) Int. Cl.: A61C 8/00, A61C 1/00

(54) **ORTHODONTIC IMPLANT DEVICE**
KIEFERORTHOPÄDISCHE IMPLANTATVORRICHTUNG
APPAREIL D'IMPLANT ORTHODONTIQUE

(30) Priority: 25.04.2006 US 745538 P
(43) Date of publication of application: 07.01.2009
(60) Divisional application: 09000254.4
(73) Proprietor: D B Orthodontics Ltd, Silsden Keighley West Yorkshire BD20 0EF (GB); Cousley, Richard, Thistleton Rutland LE15 7RE (GB)
(72) Inventor: COUSLEY, Richard, Rutland, PE9 4AR (GB)
(74) Representative: Mohun, Stephen John
(86) International application number: PCT/GB2007/001265
(87) International publication number: WO 2007/128969

(56) References cited:
- WO-A-01/37752
- WO-A-97/43981
- US-A- 5 556 278
- US-A1- 2002 182 560

## Description

This invention relates to an orthodontic implant device.

It is known to provide orthodontic devices in the form of modified bone screws, also referred to as "mini-implants", to provide independent anchor points in the jaw bone of a patient to allow both direct and indirect orthodontic traction. For example, bone screws are used to allow the attachment of fixed orthodontic appliances thereto, such as braces, in order to allow the teeth of a patient to be moved in a required direction.

One such orthodontic implant is known from WO-A-01/37752.

There are typically two basic types of conventional bone screws; a non-drilling or "self tapping" mini-screw, wherein a pilot hole is required to be drilled in the jaw before the screw is inserted, and a self-drilling screw, wherein a pilot hole is not required to be drilled, although some indentation of the cortical plate may be desirable.

A conventional mini bone screw typically includes a screw head with a slot or cross recess defined in a top surface thereof to allow engagement of an insertion tool thereto, such as for example a screw driver. A threaded body is provided below the screw head and the threaded body typically has a narrowing taper towards a tip at the opposite end of the screw from the screw head. A recess or undercut can be provided between a lower surface of the screw head and the threaded body to allow the attachment of a component of an orthodontic appliance thereto, such as an elastic band of a brace. However, a problem with providing a recess between the threaded body and the screw head is that it provides the screw with a high upper profile, thereby causing discomfort to a user. In addition, due to the side of the screw head, it is often difficult to insert a band or part of orthodontic appliance over the screw head.

Precise three dimensional positioning of mini bone screws in a patient has also been found critical to their success. The insertion technique used should maximize the available bone volume whilst avoiding adjacent anatomical structures, such as dental roots, neurovascular tissues and nasomaxillary cavities. In addition, planned tooth movement should be taken into account since improper positioning may result in interference with the required tooth movement and limit the effectiveness of the skeletal anchorage. However, it is often difficult to accurately position mini bone screws due to visual obstruction and restricted instrument access in the patient's mouth, particularly when the mini bone screws are to be placed in posterior or palatal locations. In addition, problems can arise when the planning of treatment and the actual implant insertion is undertaken by different clinicians.

Conventionally, it is known to use a wire guide, which is radiographed in place in the patient's mouth to show the relationship between the planned insertion site and the adjacent dental roots. However; such wire guides provide only limited topographical information, rather than a direct indication of the implant angulation.

It is therefore an aim of the present invention to provide an improved orthodontic implant which overcomes the abovementioned problems.

The present invention is defined in the attached independent claim, to which reference should now be made. Further, preferred features may be found in the sub-claims appended thereto.

According to a first aspect of the present invention there is provided an orthodontic implant device, said device including a head portion, engagement means provided on or associated with the head portion to allow an insertion instrument to engage therewith in use and a body portion extending from a lower surface of the head portion, and wherein at least one recess dr undercut is provided substantially internally of the head portion.

The at least one recess or undercut is provided in addition to or in association with the engagement means of the head portion.

The at least one recess or undercut is arranged so as to provide a point of attachment for at least part of an orthodontic appliance thereto. By providing the recess or undercut in the head portion itself, this allows the implant device to have a lower profile than conventional implant devices having a recess or undercut provided between a lower surface of the implant or head portion and the body portion. The recess or undercut also reduces the likelihood of the orthodontic appliance part from coming loose in the patient's mouth and removes the requirement for a secondary attachment wire or means therewith.

Preferably the orthodontic implant device is a "mini-implant" device.

In one embodiment the head portion includes or is associated with a neck portion and the engagement means are associated with the neck portion. For example, the engagement means can be associated with a pentagonal surface of the neck portion in one embodiment. In an alternative embodiment the engagement means can be associated with an upper surface of the head portion. The neck portion is typically provided between the head portion and the body portion, the body potion extending from a lower surface of the neck portion and the head portion extending from an upper surface of the neck portion.

Preferably the orthodontic appliance part includes a wire, tie, band, rubber or elastic piece, ligature and/or the like.

The engagement means includes one or more slots defined in an upper surface of the head portion. In one embodiment at least two slots are provided on the upper surface of the head portion to form a cross. It is to be appreciated that the engagement means provided on the upper surface of the head portion need not be used to allow engagement of an insertion tool therewith and can simply be provided to have the orthodontic appliance part be located with the undercut associated with the engagement means.

Preferably the implant device is in the form of a screw and the body portion is at least partially threaded.

The insertion instrument can be in the form of a screw driver. For example, the head of the screw driver can engage with the neck portion and/or head portion of the device and/or the slots or other engagement means defined on the head portion and/or neck portion.

The at least one recess or undercut is in addition to the engagement means. Thus, in one embodiment, the at least one recess or undercut is associated with the one or more slots defined in the upper surface of the head portion.

At least one recess or undercut is provided substantially internally of the screw head portion.

Preferably the at least one recess or undercut is in communication with the one or more slots.

The slot is in the form of a channel with the top open end of the channel adjacent the upper surface of the head portion, the side walls and the base of the channel provided below and/or a pre-determined distance below the upper surface of the head portion. Preferably the base of the channel is provided substantially vertically below and/or substantially directly opposite the open end of the channel. The channel can have open side ends adjacent the external side of the head portion.

Preferably the at least one recess or undercut is provided laterally or on at least one side of the base of the channel slot (i.e. the undercut or recess is defined in a side wall or walls of the channel slot). Further preferably the at least one recess or undercut is provided on both sides of the base of the channel slot.

The at least one recess or undercut is provided substantially perpendicular to the substantially vertical or upright section or side walls of the channel slot.

In one embodiment the base of the recess or undercut is substantially continuous or planar with the base of the channel slot. However, the base of the recess or undercut could be provided at a different height (i.e. a pre-determined distance above or below) compared to the base of the channel slot.

The at least one recess or undercut is of such dimensions to allow a wire or part of an orthodontic appliance to be located therewith (i.e. whilst keeping the slot of the engagement means clear for engagement with an insertion tool).

A top wall of the recess or undercut typically acts as a hook or engagement surface for the wire or orthodontic appliance part when located therewith in use.

Thus, the at least one recess or undercut can be said to be defined "internally" of the head portion in that it is within the boundary of the exterior walls of the head portion.

In one embodiment the at least one recess or undercut communicates with at least one further recess or undercut provided around at least part of a peripheral edge, side wall or "externally" of the head portion. The at least one further recess or undercut can be provided for the attachment of one or more wires or orthodontic appliance parts thereto. The recess or undercut is provided laterally or substantially perpendicularly to the external side walls of the head portion.

The at least one further recess or undercut provided around a peripheral edge of the head portion is typically provided a predetermined distance below the upper surface of the head portion.

In one embodiment attachment means are provided on the head portion for the attachment or one or more wires of orthodontic appliance parts thereto. The attachment means are preferably in addition to the "internal" undercut or recess and/or the further or "external" undercut or recess.

The attachment means can include one or more apertures, channels, slots and/or the like. The attachment means are preferably provided below an upper surface of the head portion. Preferably the one or more apertures or channels are provided through the head portion (i.e. from one side to an opposite side thereof).

In one embodiment the implant device is of a "self drilling" type. Preferably the tip of the body portion is sufficiently sharp to allow penetration through cortical bone or a jaw bone without a pilot hole being drilled.

Preferably at least one self tapping notch is provided an the body portion of the implant device. Further preferably the length of the self taping notch is provided substantially longitudinally of the body portion of the implant device.

In one example a bone punch is provided to allow penetration of bone, particularly cortical bone, prior to insertion of the implant device therein. The bone punch typically includes a burr type of device and further preferably said burr is located at an end of said bone punch.

According to an embodiment not forming part of the present invention there is provided an orthodontic implant positioning apparatus, said apparatus including an analogue implant device for location in a dental cast, guidance means for location with said analogue implant device and stent forming means for forming a stent of the dental cast, analogue implant and guidance means.

The stent allows the transfer of the planned three dimensional implant position from a dental cast of the patient's teeth to a surgical placement procedure without using computed tomography scans as used in the prior art.

The analogue implant device is typically substantially identical or similar to an implant device which is to be used in a patient, particularly with regard to the exterior dimensions of the implant device. As such, the analogue implant device provides a replicate of the implant device which is to be used in a patient. The at least one recess or undercut can be omitted from the analogue implant device if required. The analogue implant device typically includes a head portion and a body portion as with the implant device.

Preferably the guidance means includes engagement means for engaging with at least part of the analogue implant device.

Preferably the guidance means is of such shape and dimensions to fit over at least an end of the head portion of the analogue implant device and to engage therewith. Thus, the guidance means acts to elongate the analogue implant device at the angle and position the analogue implant is placed in use in the dental cast.

In one example the guidance means typically includes a housing with at least one channel defined therethrough (preferably longitudinally thereof). The channel has open ends, a first open end for location directly or indirectly over the analogue implant device and a second open end for location of a suitable tool therein.

In one example the guidance means includes an intermediate engagement member or abutment member for location between the analogue implant device and the channel housing. The intermediate engagement member helps to position the channel housing in the correct position in use. As such, the channel housing is located indirectly over the analogue implant device in this embodiment.

Preferably the intermediate engagement member has a first end which is of substantially complementary shape to the top end or head portion of the analogue implant device to allow engagement therebetween.

Preferably the channel housing is located over the second end of the intermediate engagement member. The channel housing can be maintained in position by friction fit or some other engagement means.

Preferably the stent is formed from a plastics material. When the stent is formed and the dental cast, analogue implant and guidance means are removed therefrom, an open ended channel is defined in the stent to allow insertion of an implant device and insertion tool therein at the required position and angle relative to the patient's teeth.

Preferably the analogue implant device is substantially of the same dimensions to the implant device to be used in the patient in whom the dental cast was formed.

Preferably the stent is formed using vacuum forming machine and a stent base plate. The stent base plate is moulded to the shape of the cast, the analogue implant and the guidance means.

According to another embodiment not forming part of the present invention there is provided a method of forming a stent for positioning of an orthodontic implant device in a patient, said method including the steps of locating an analogue implant device at a required position in a dental cast of the patient's teeth, attaching guidance means to the implant device and forming a stent with stent forming means over the dental cast, analogue implant device and guidance means.

According to a further embodiment not forming part of the present invention there is provided a method of using a stent for positioning an orthodontic implant device in a patient, said method including the steps of aligning a stent or mould formed using a dental cast of a patient's teeth with a patient's teeth, locating an implant device in a channel defined in the stent and engaging an insertion tool with a head portion of the implant device to insert the implant device into the patient.

Preferably the head portion includes a neck portion and insertion tool engages with the neck portion of the implant device.

Embodiments of the present invention will now be described, with reference to the accompanying figures, wherein:
Figures 1a-1e show a first side view, perspective view, top view, second side view and detailed view of A shown in the second side view of an orthodontic implant according to one embodiment of the present invention respectively;
Figure 2 shows an enlarged top view of the implant in figure 1c with the hatched area showing the internal undercut of the present invention;
Figures 3a and 3b show an external view of an implant guide device for use in the method of positioning an implant in a patient or on an orthodontic cast and an intermediate guidance attachment member respectively;
Figures 4a and 4b show a side view and plan view from the top respectively of a further embodiment of an implant according to the present invention;
Figures 5a-5b show a perspective view of one example of a bone punch insert for use with the present invention and a detailed end view of the bone punch respectively;
Figure 6a-6b show a perspective view of one example of a soft tissue punch insert for use with the present invention and a detailed end view of the soft tissue punch respectively;
Figures 7a-7c show a side view, perspective view and cross sectional view respectively of a screwdriver hand piece for use with the tissue punch and/or bone punch inserts shown in figures 5a-6b;
Figure 8 illustrates an example of a stent formed using a stent forming method; and
Figure 9 illustrates an analogue implant device, a guidance cylinder and abutment member.

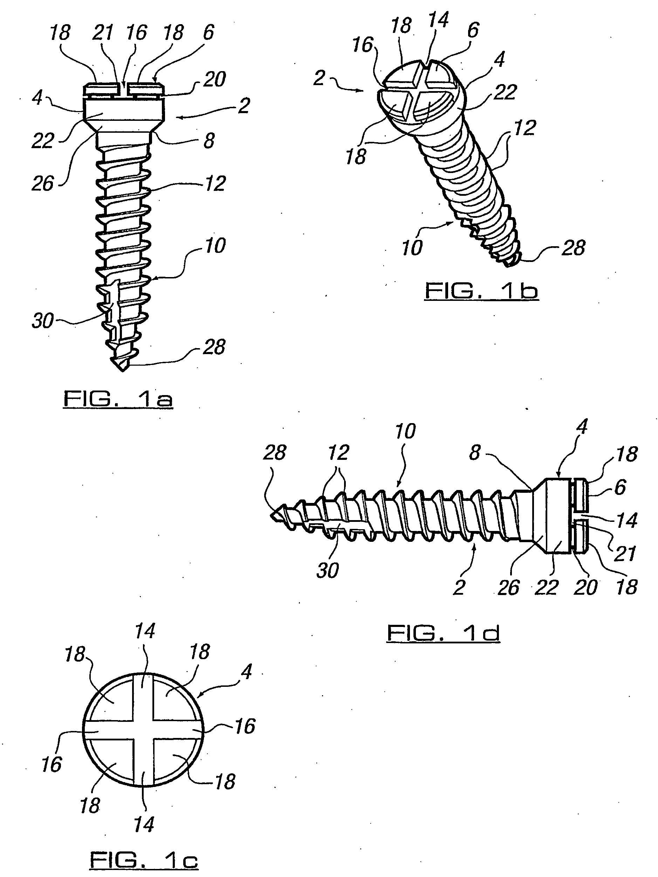

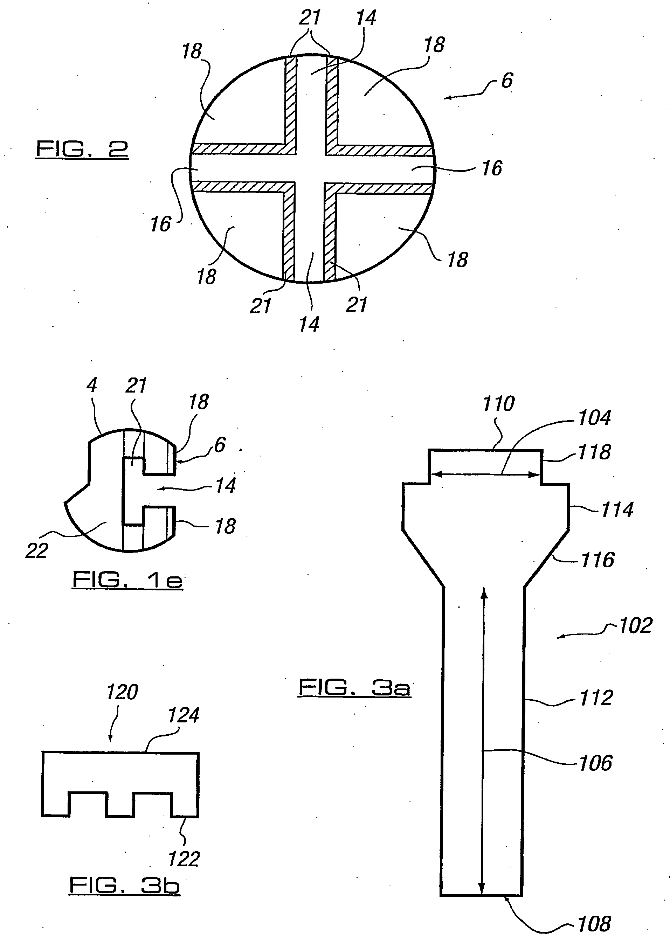

Referring firstly to figures 1a-1e and 2, there is illustrated an orthodontic mini-implant device in the form of a screw 2. The screw 2 is used to provide a point of anchorage in skeletal tissue for an orthodontic appliance.

The screw 2 includes a head portion 4 having an upper end 6 and a lower end 8, and a body portion 10 having a screw thread 12 provided thereon. The body portion 10 extends from lower end 8 of head portion 4.

Engagement means in the form of two slots 14, 16 are defined in upper end 6 and are provided substantially perpendicular to each other across substantially the entire width or diameter of the upper surface 6. Four quadrant pieces 18 are defined between slots 14, 16. The upper surface of these quadrant pieces comprise upper surface or end 6 of screw head 4.

The slots 14, 16 are typically in the form of channels, with the upright part or depth of the channel located substantially longitudinally of the screw 2. The open end of the channel is substantially flush with upper end 6 of screw head 4 and the base of the channel is located a vertical distance below the upper end of the screw head.

Recesses or undercuts 21 according to the present invention are defined internally of the screw head 4 below quadrant pieces 18 and above mid portion 22 of the screw head. Further recesses or undercuts 20 are provided around the outer perimeter of the screw head 4. Both recesses 21 and recesses 20 communicate with each other and with the channel slots 14, 16.

More particularly, recesses 21 are provided laterally of channels slots 14, 16 and substantially perpendicular to the depth of the channel. The base of recesses 21 is substantially continuous with the base of the channel slots. Thus, the recesses 21 and slots form an inverted 'T' formation. This provides a shoulder or hook-like portion for engagement of a part of an orthodontic appliance, such as for example a ligature wire, thereto.

The recesses 20, and particularly the undercut portion 21, as shown in figure 2, on the interior surfaces of the screw head defining slots 14, 16 increase the ease with which an orthodontic appliance can be directly attached to the screw head without increasing the height profile of the screw head. Thus, the screw head of the present invention can include both external and internal recesses or undercuts. Alternatively, the screw head of the present invention can provide internal recesses or undercuts only. Further attachment means can be provided with the screw head, such as one or more channels passing through middle section 22 of screw head 4 and/or the like.

A lower portion 26 of screw head 4 has a narrowing taper towards lower end 8 of screw head 4. This taper is preferably at substantially a 45 degree angle (although the taper could be between approximately 45-70 degree angle) to improve the fit of the screw head against the bone surface in use.

The screw thread 12 can take any suitable form and can be tapered if required along a part or, whole of the length thereof and/or on the width from the outer free edge to the body portion. In the illustrated embodiment the screw thread 12 is provided along substantially the entire length of body portion 10 but it will be appreciated that the screw thread could be provided along a part of the body portion only.

Body portion 10 has a narrowing taper from end 8 to tip 28. In addition, a self tapping notch 30 is provided adjacent tip 28. This notch 30 extends longitudinally of body portion 10. The self tapping notch typically aids insertion of the screw in the patient's jaw. In addition, the tip 28 and the screw thread 12 is typically sharp enough and of such form to remove the requirement for drilling a pilot hole to allow insertion.

The screw 2 can be formed from any suitable material but it is preferably that the material is titanium or a titanium alloy and further preferably grade 5 titanium alloy.

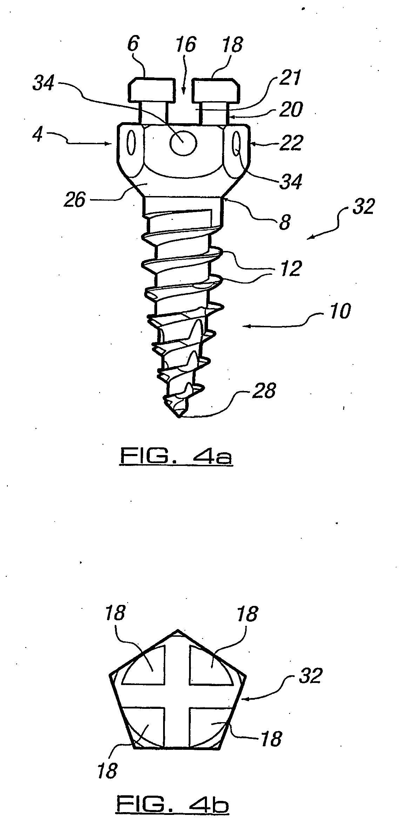

Referring to figures 4a and 4b, a further example of a mini implant 32 according to the present invention is illustrated. Similar features are shown using the same reference numerals as in figures 1-2. Attachment means in the form of channels 34 are defined through middle section 22. The channels 34 typically pass from one side of middle section 22 to an opposite side. The attachment means allow wires, parts of orthodontic appliances and/or the like to be attached thereto. The pentagonal outer surface of the head and/or neck portion enables engagement with an insertion tool therewith.

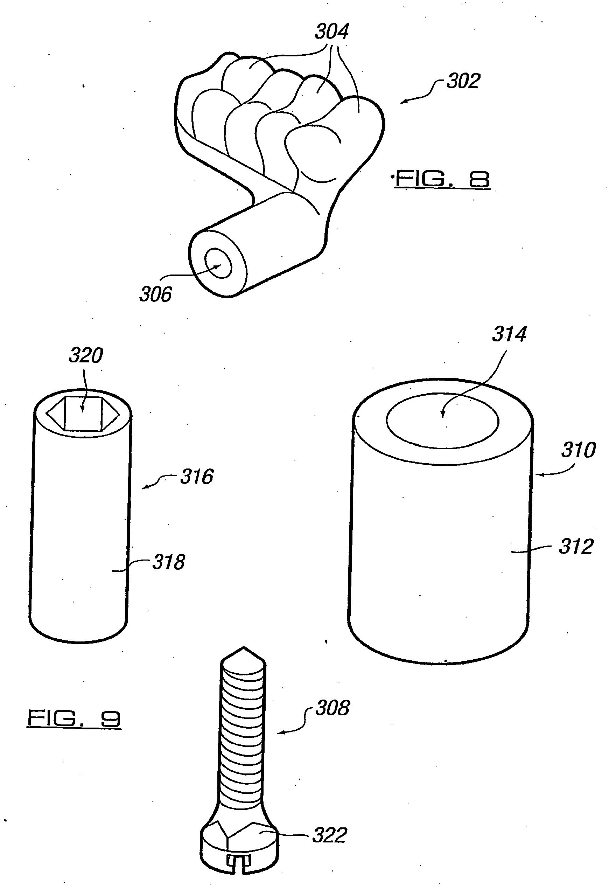

Referring to figure 3a, there is illustrated apparatus for use in the method of positioning an implant in a patient's mouth or orthodontic cast of a patient's teeth. The apparatus includes a guidance cylinder 102 which allows the implant position and/ angulations to be transferred to the surgical placement position in a patient. The stent 302 that is formed using the apparatus, see figure 8, allows access for both visual monitoring by the orthodontist and saline irrigation. It is particularly advantageous when the implant is being planned and inserted by different clinicians or when the orthodontist is inexperienced in implant techniques.

In order to correctly position a mini implant in a patient's mouth, a dental cast is typically made of the patient's teeth, such as for example a cast formed from Plaster of Paris^{™}. Using the cast and radiographs of the patient's teeth, the clinician determines the position and angle of the implant in the patient's mouth. The three major parameters are considered in this positioning process; the topographical entry point, the anterior/posterior angle of entry and the vertical inclination of entry.

The clinician then drills a hole in the cast at substantially the exact position and angle required for the patient's implant. This hole in the illustrated method is typically 9mm in depth.

An analogue or dummy implant, which is substantially of the same external dimensions and type as the actual mini-screw implant that is to be inserted in the patient's mouth, is inserted into the drilled cast hole. The analogue implant does not need to include the external or internal recesses if required. The analogue implant can be formed from any suitable material, such as for example, steel.

Guidance cylinder or channel 102 is then fitted to the analogue implant and acts to increase the length of the analogue implant. However, in one embodiment an intermediate guidance attachment member 120 is attached to the top of the analogue screw head to increase the projection of the analogue implant device from the cast. This allows secure attachment of the guidance cylinder around the screw head, as shown in figure 3b. Intermediate attachment member 120 includes a base 122 which is substantially complementary in shape to external pentagonal surface of the analogue head and/or neck portion. The top 124 of member 120 is of such shape and dimensions to engage with an open end 108 of the guidance cylinder.

The guidance cylinder includes first open end 108 and a second open end 110. An elongate body portion 112 is provided adjacent end 108 and this is slightly larger than or substantially equal to the size of the body portion of the analogue implant. A head portion 114 is provided adjacent end 110 and is slightly larger than the dimensions of the analogue implant head portion. The head portion 114 has a narrowing taper 116 at a lower end thereof and a raised or protruding portion 118 at end 110 thereof. More particularly, the guidance cylinder 102 is engaged over the top of the intermediate attachment member 120. Guidance cylinder 102 has an internal channel running longitudinally thereof. The diameter of this internal channel, shown by arrow 104, corresponds substantially to the diameter of the analogue implant or abutment and the external diameter of the insertion tool, such as a screw driver. The length of the internal channel, shown by arrow 106, is sufficient to allow the screw driver to positively engage within the cylinder.

The guidance cylinder and/or intermediate attachment member can be formed from any suitable material and, in one example, is formed from metal.

The cast with the analogue implant and guidance cylinder is then located in a vacuum forming machine with a suitable stent forming material or stent base plate. A blank mould or stent 302 is then made of the dental cast with the guidance cylinder in place. When the stent is removed, it includes an impression of the user's teeth 304 with an elongate channel 306 provided at the required location and at the required angle necessary for insertion of the actual implant in the patient's mouth. The blank mould or stent 302 can be trimmed, such as on the labial and lingual edges.

The stent 302 is then located over the patient's teeth in such a manner that the teeth indents 304 are aligned with the patient's actual teeth by a clinician. The implant of the present invention and the implant insertion drill or tool can be located through the elongate channel 306 of the stent to allow correct positioning in the patient's mouth. A bone punch may first need to be located through the stent channel to make an initial aperture or pilot hole at the site of location of the implant.

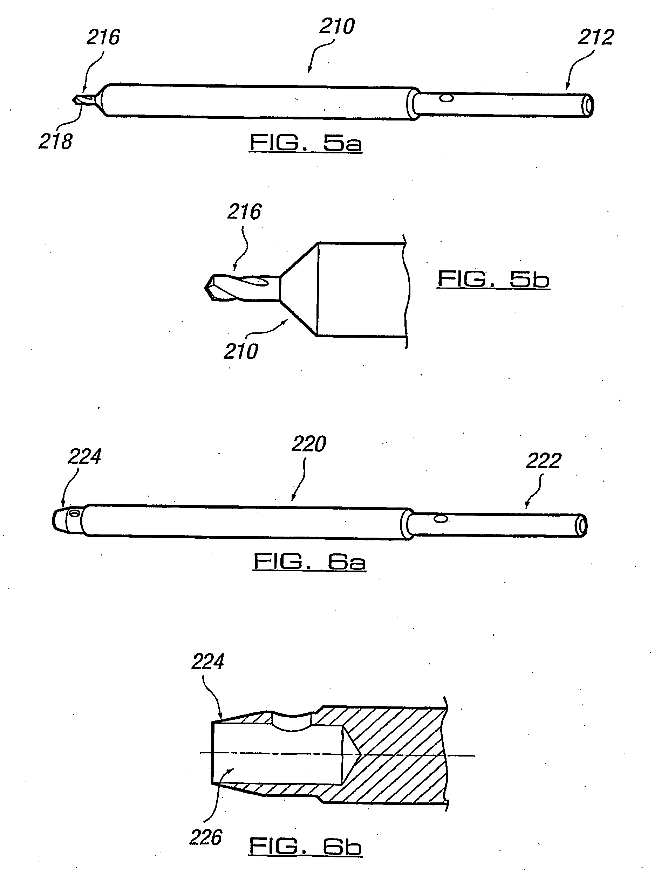

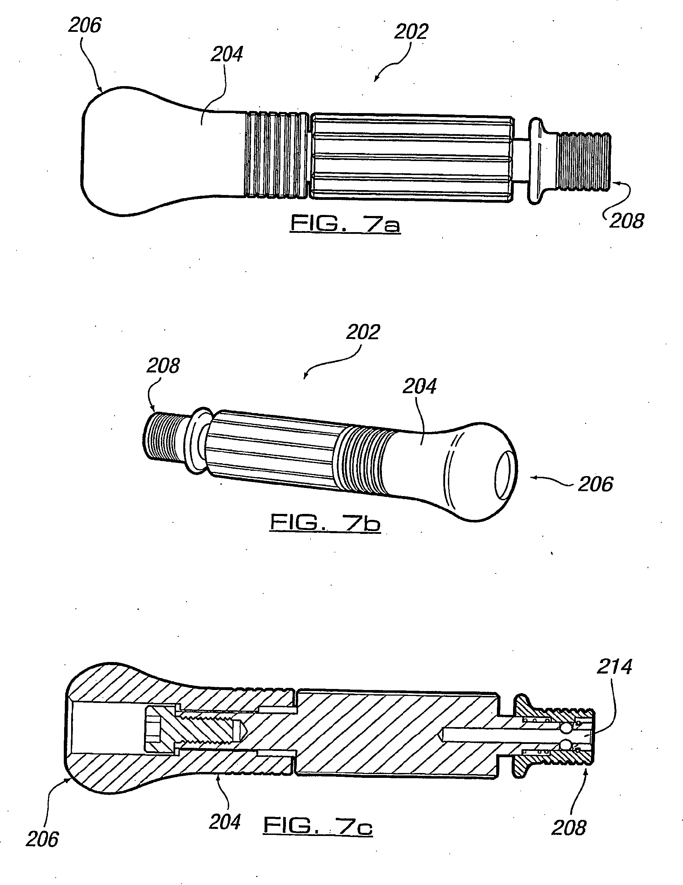

Figures 7a-7c illustrate an example of a handle 204 of an insertion instrument 202 that can be used to insert the implant used in the present invention. The handle 204 has a first end 206 and a second end 208. Different screw driver or tool inserts can be detachably attached to second end 208. Examples of different tool inserts that can be used with insertion instrument 202 are shown in figures 5a-6b. More particularly, figures 5a and 5b illustrate a cortical bone punch insert 210 having a first end 212 for location in channel 214 defined in second end 208 of handle 202, and a second end 216 having a burr 218 located thereon for punching a recess in the bone. Figures 6a and 6b illustrate a tissue punch insert 220 having a first end 222 for location in channel 214 of handle 202, and a second end 224 having a recess or channel 226 defined therein (and provided substantially longitudinally of the insert 220) for punching a recess in a patient's mouth soft tissue.

Figure 9 illustrates an alternative example of a stent forming kit. The kit includes an analogue implant 308 with external dimensions corresponding substantially to the external dimensions of the actual implant device to be located in the patient, a guidance cylinder 310 including an elongate cylindrical housing 312 with a channel 314 defined longitudinally thereof and an intermediate abutment member 316 with a cylindrical housing 318 and a pentagonal shaped inner channel or recess 320 at one end thereof to substantially correspond with the pentagonal outer surface of neck portion 322 of analogue implant 308 to allow engagement therewith. The outer dimensions of the abutment member 316 are slightly smaller than the dimensions of channel 314, thereby allowing the guidance cylinder to be located over at least part of abutment member 316 to elongate the analogue implant to allow the stent to be formed with a protruding channel portion.

## Claims

1. An orthodontic,implant device, said device including a head portion; engagement means to allow an insertion instrument to engage therewith in use; a body portion extending from a lower surface of the head portion wherein the engagement means includes one or more slots defined in an upper surfate of the head portion, the one or more slots in the form of a channel with an open end, a base and side walls; wherein at least one recess or undercut is provided substantially internally of the head portion to provide a point of attachment for at least part of an orthodontic appliance thereto, **characterised in that** said at least one recess or undercut being defined in a side wall or walls of the channel and provided laterally of the channel substantially perpendicular to the side walls.

2. A device according to claim 1 wherein two slots are provided and are arranged on the upper surface of the head portion to form a cross.

3. A device according to claim 1 wherein the device is in the form of a screw and at least part of the body portion is provided with a screw thread.

4. A device according to claim 1 wherein the part of the orthodontic appliance is a wire, band, rubber or elastic piece, ligature or tie.

5. A device according to claim 1 wherein the substantially internal recess or undercut communicates with a further recess or undercut provided around at least part of an external edge or side walls of the head portion.

6. A device according to claim 5 wherein the further recess or undercut is provided substantially perpendicularly to the external side wall of the head portion.

7. A device according to claim 1 wherein attachment means are provided on the head portion and said attachment means are provided below an upper surface of the head portion.

8. A device according to claim 7 wherein the attachment means includes one or more apertures, slots or channels.

9. A device according to claim 1 wherein the device is a self drilling type and an end of the device is sufficiently sharp to allow penetration, through bone.

10. A device according to claim 4 wherein a self tapping notch is provided on the body portion,

11. A device according to claim 10 wherein the length of the self tapping notch is provided substantially longitudinally of the device.

12. A device according to claim 1 wherein a lower part of the head portion or a neck portion is provided with a narrowing taper towards the body portion.

13. A device according to claim 12 wherein the narrowing taper is at an angle of between 45-70 degrees.

14. A device according to claim 1 wherein the head portion includes a neck portion and the engagement means are associated with, the neck portion, and preferably wherein the engagement means are associated with a pentagonal surface of the neck portion.

## Patentansprüche

1. Kieferorthopädische Implantatvorrichtung, welche aufweist einen Kopfbereich; ein Eingriffsmittel, um es einem Einbringinstrument zu erlauben, bei der Benutzung damit in Eingriff gebracht zu werden; einen Körperbereich, welcher sich von einer unteren Oberfläche des Kopfbereichs erstreckt; wobei das Eingriffsmittel umfasst: einen oder mehrere Schlitze, welche in einer oberen Oberfläche des Kopfbereichs definiert sind, wobei der eine oder die mehreren Schlitze in der Form eines Kanals mit einem offenen Ende, einer Basis und Seitenwänden ausgebildet sind; wobei zumindest ein Rücksprung oder Hinterschnitt im Wesentlichen im Inneren des Kopfbereichs vorgesehen ist, um einen Befestigungspunkt für zumindest einen Teil einer kieferchirurgischen Vorrichtung daran bereitzustellen, **dadurch gekennzeichnet, dass** der zumindest eine Rücksprung oder Hinterschnitt in einer Seitenwand oder -wänden des Kanals definiert ist und lateral des Kanals im Wesentlichen rechtwinklig zu den Seitenwänden vorgesehen ist.

2. Vorrichtung nach Anspruch 1, wobei zwei Schlitze auf der oberen Oberfläche des Kopfbereichs bereitgestellt und angeordnet sind, um ein Kreuz zu formen.

3. Vorrichtung nach Anspruch 1, wobei die Vorrichtung in der Form einer Schraube ist und zumindest ein Teil des Körperbereichs mit einem Schraubengewinde versehen ist.

4. Vorrichtung nach Anspruch 1, wobei der Teil der kieferchirurgischen Vorrichtung ein Draht, ein Band, ein Gummi oder ein elastisches Element, eine Ligatur oder ein Zugelement ist.

5. Vorrichtung nach Anspruch 1, wobei der im Wesentlichen innere Rücksprung oder Hinterschnitt mit einem weiteren Rücksprung oder Hinterschnitt in Verbindung steht, welcher um zumindest einen Teil einer äußeren Kante oder Seitenwand des Kopfbereichs vorgesehen ist.

6. Vorrichtung nach Anspruch 5, wobei der weitere Rücksprung oder Hinterschnitt im Wesentlichen rechtwinklig zur äußeren Seitenwand des Kopfbereichs vorgesehen ist.

7. Vorrichtung nach Anspruch 1, wobei Befestigungsmittel auf dem Kopfbereich vorgesehen sind und wobei die Befestigungsmittel unter einer oberen Oberfläche des Kopfbereichs vorgesehen sind.

8. Vorrichtung nach Anspruch 7, wobei das Befestigungsmittel eine oder mehrere Öffnungen, Schlitze oder Kanäle umfasst.

9. Vorrichtung nach Anspruch 1, wobei die Vorrichtung selbstbohrend ist und ein Ende der Vorrichtung ausreichend scharf ist, um das Eindringen in einen Knochen zu erlauben.

10. Vorrichtung nach Anspruch 1, wobei ein selbstgewindeschneidender Einschnitt an dem Körperbereich vorgesehen ist.

11. Vorrichtung nach Anspruch 10, wobei die Länge des selbstgewindeschneidenden Einschnitts im Wesentlichen longitudinal der Vorrichtung vorgesehen ist.

12. Vorrichtung nach Anspruch 1, wobei ein unterer Teil des Kopfbereichs oder Halsbereichs mit sich verjüngenden Neigung in Richtung des Körperbereichs versehen ist.

13. Vorrichtung nach Anspruch 12, wobei die sich verjüngende Neigung einen Winkel von 45° bis 70° aufweist.

14. Vorrichtung nach Anspruch 1, wobei der Kopfbereich einen Halsbereich umfasst und die Verbindungsmittel mit dem Halsbereich verbunden sind und wobei die Verbindungsmittel vorzugsweise mit einer pentagonalen Oberfläche des Halsbereichs verbunden sind.

## Revendications

1. Dispositif formant implant orthodontique, ledit dispositif comportant une partie de tête ; des moyens de couplage afin de permettre, en utilisation, le couplage d'un instrument d'insertion avec celui-ci ; une partie de corps s'étendant à partir d'une surface inférieure de la partie de tête, dans lequel les moyens de couplage comportent une ou plusieurs fentes définies sur une surface supérieure de la partie de tête, la ou les fentes étant sous la forme d'un canal avec une extrémité ouverte, une base et des parois latérales ; dans lequel au moins un évidement ou cavité est agencé de manière sensiblement interne sur la partie de tête afin de former un point de fixation pour au moins une partie d'un appareil orthodontique sur celui-ci, **caractérisé en ce que** le ou lesdits évidements ou cavités sont définis dans une ou des parois latérales du canal et agencés latéralement par rapport au canal de manière sensiblement perpendiculaire aux parois latérales.

2. Dispositif selon la revendication 1, dans lequel deux fentes sont formées et sont agencées sur la surface supérieure de la partie de tête de manière à former une croix.

3. Dispositif selon la revendication 1, dans lequel le dispositif est sous la forme d'une vis et au moins une partie de la partie de corps est équipée d'un filetage de vis.

4. Dispositif selon la revendication 1, dans lequel la partie de l'appareil orthodontique est un fil, une bande, une pièce en caoutchouc ou élastique, une ligature ou un lien.

5. Dispositif selon la revendication 1, dans lequel l'évidement ou cavité sensiblement interne communique avec un autre évidement ou cavité agencé autour d'au moins une partie d'un bord externe ou de parois latérales de la partie de tête.

6. Dispositif selon la revendication 5, dans lequel l'autre évidement ou cavité est agencé de manière sensiblement perpendiculaire à la paroi latérale externe de la partie de tête.

7. Dispositif selon la revendication 1, dans lequel des moyens de fixation sont agencés sur la partie de tête et lesdits moyens de fixation sont agencés au-dessous d'une surface supérieure de la partie de tête.

8. Dispositif selon la revendication 7, dans lequel les moyens de fixation comportent un ou plusieurs canaux, ouvertures ou fentes.

9. Dispositif selon la revendication 1, dans lequel le dispositif est du type autoforeur et une extrémité du dispositif est suffisamment effilée pour permettre la pénétration de l'os.

10. Dispositif selon la revendication 1, dans lequel une entaille d'autotaraudage est formée sur la partie de corps.

11. Dispositif selon la revendication 10, dans lequel la longueur de l'entaille d'autotaraudage est agencée de manière sensiblement longitudinale sur le dispositif.

12. Dispositif selon la revendication 1, dans lequel une partie inférieure de la partie de tête ou d'une partie de col comporte un cône convergeant vers la partie de corps.

13. Dispositif selon la revendication 12, dans lequel le cône convergeant présente un angle compris entre 45 et 70 degrés.

14. Dispositif selon la revendication 1, dans lequel la partie de tête comporte une partie de col et les moyens de couplage sont associés à la partie de col et, de préférence, dans lequel les moyens de couplage sont associés à une surface pentagonale de la partie de col.
